# EUROPEAN PATENT APPLICATION

(11) **EP 0 997 404 A1**
(43) Date of publication of application: **03.05.2000**
(21) Application number: 99830605.4
(22) Date of filing: 24.09.1999
(51) Int. Cl.: B65G 45/18, B65G 45/26

(54) **Cleaning apparatus for overhead conveyors provided with carriages movable on guide rails**

(30) Priority: 30.10.1998 IT RN980019 U
(71) Applicant: N.P. Supply Co. S.R.L., 48022 Ciribella di Lugo (IT)
(72) Inventor: Pagani, Nidio, 48020 S. Bernardino (IT)
(74) Representative: Lanzoni, Luciano

(57) **Abstract**

A cleaning apparatus (1) for overhead conveyors (2) provided with carriages (3) for supporting products, movable on guide rails (4), comprises one or more brushes (5) for cleaning the conveyor (2); a structure (6) for supporting the brushes (5); and adjustment means (7) for regulating the position of each brush (5) with respect to the conveyor (2). The support structure (6) comprises a frame (8) able to be removably fastened to the guide rail (4) and universally applicable to a plurality of different types of rail (4); each brush (5) being borne by at least an arm (9, 15, 17, 19) attached and supported solely by the frame (8).

## Description

The present invention relates to the sector of continuous overhead conveyors of products and more specifically it pertains to a cleaning apparatus provided with brushes, which is applied to the conveyor in such a way as to interact with the movable parts thereof, automatically determining their cleaning while in use.

Continuous overhead conveyors, as is generally known, find ample use in the most disparate industrial environments for the conveyance in continuous succession of products undergoing work processes, such as food products; machine parts being assembled; products to be subjected to particular surface treatments; tunnel painting, and so on.

The need is therefore strongly felt systematically to clean said conveyors to prevent the contamination of the conveyed products, or even their dirtying wherefrom may derive, in addition to a degradation in product quality, also a prejudicial condition for the successful completion of the treatments whereto the product is subsequently to be subjected. This latter aspect is particularly felt especially in electrostatic painting plants, with powder or liquid paint, wherein a potential difference is established between a sprayer nozzle and the object to be painted in such a way that the spray paint, the powder particles, or the paint droplets are electro-statically attracted towards the object to be painted.

In a painting operation of this kind, the conveyor takes part in the transmission of the electrical potential to the products to be painted, so that its metal parts are themselves prone to be covered with paint, just like the conveyed products.

Hence the need arises to provide for the systematic removal of the layers of paint deposited on the various parts of the conveyor, as well as for their collection together with the excess grease and lubricants or the sludges that are always present in every plant of this kind.

A solution to this problem, described in the document US 4678075, is obtained by means of a cleaning apparatus for overhead conveyors provided with product support carriages, movable on guide-rails, comprising at least a brush; at least a structure for supporting said one or each brush; and adjustment means for regulating the position of the brush with respect to the conveyor.

The support structure is obtained in a single body with a rail segment of suitable length which is drawn from the rail itself, is worked in such a way as to obtain access openings for the brushes and is reinserted into the rail and welded thereto, restoring the continuity necessary for operation.

A structure of this kind has numerous drawbacks, among them the fact that it requires a very accurate execution of the cut; that it entails considerable execution time and costs and that it requires "ad hoc" personalised solutions for each specific application of the apparatus. If one also considers the fact that each manufacturer of overhead conveyors adopts profiles that are geometrically different from those of the competing manufacturers, it is easy to understand that such a conceptual design entails a broad proliferation of differently shaped apparatuses, with obvious disadvantages in terms of costs and repeatability of the construction.

A further drawback is represented, lastly, by the fact that cutting the segment necessarily also entails relatively long plant idle times when the cleaning apparatus is applied on existing plants.

The aim of the present invention, as it is characterised by the claims, is to overcome the aforesaid drawbacks by means of an apparatus structured as an autonomous entity, independent of the rail, applicable to a wide range of different rail profiles, without requiring the cutting of the rail and the drawing of the segment.

In accordance with the invention, this aim is reached by a cleaning apparatus for conveyors, realised according to the preamble to claim 1, wherein the support structure comprises a frame able to be removably fastened to the guide-rail and applicable universally to a plurality of different types of rails, each of the brushes being borne by at least an arm supported solely and exclusively by said frame.

The technical characteristics of the invention, according to the aforesaid aims, can be clearly noted from the content of the claims that follow and its advantages shall be made more readily apparent in the content of the detailed description that follows, made with reference to the accompanying drawings, which represent an embodiment provided purely by way of non limiting example, wherein:
- Figures 1, 2 and 3 show a first embodiment of apparatus according to the invention applied to an open profile rail and seen respectively in elevation, in top plan view and in side view;
- Figures 4, 5 and 6 are an elevation view, a top plan view, and a side view of the apparatus of Figure 1 applied to a rail with closed, tubular profile.

With reference to the accompanying drawings, the number 1 globally indicates a cleaning apparatus for overhead conveyors 2 of products, provided with support carriages 3 movable on bodies 14 rolling on guide-rails 14.

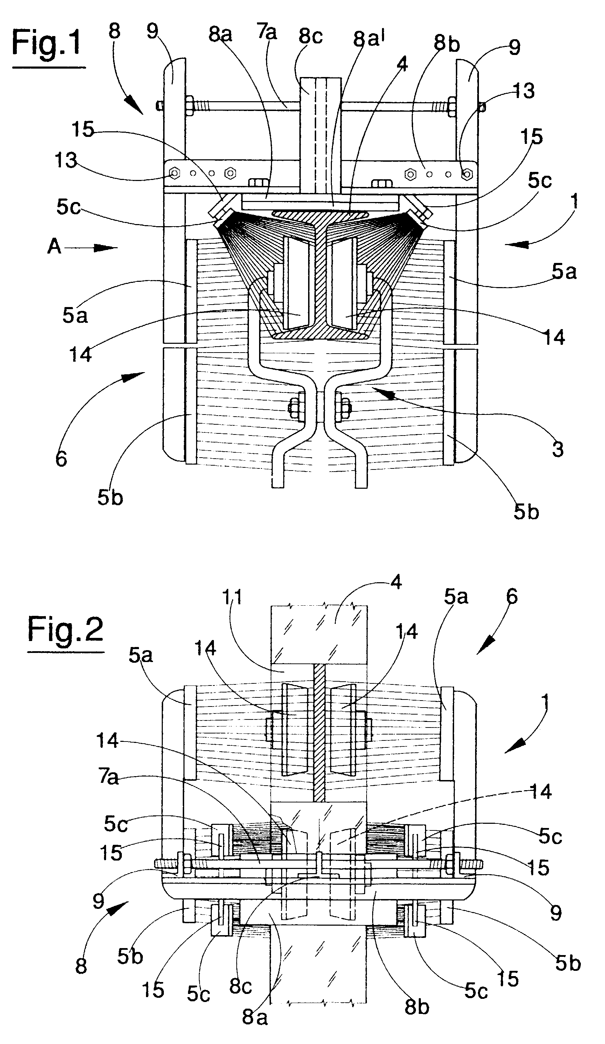

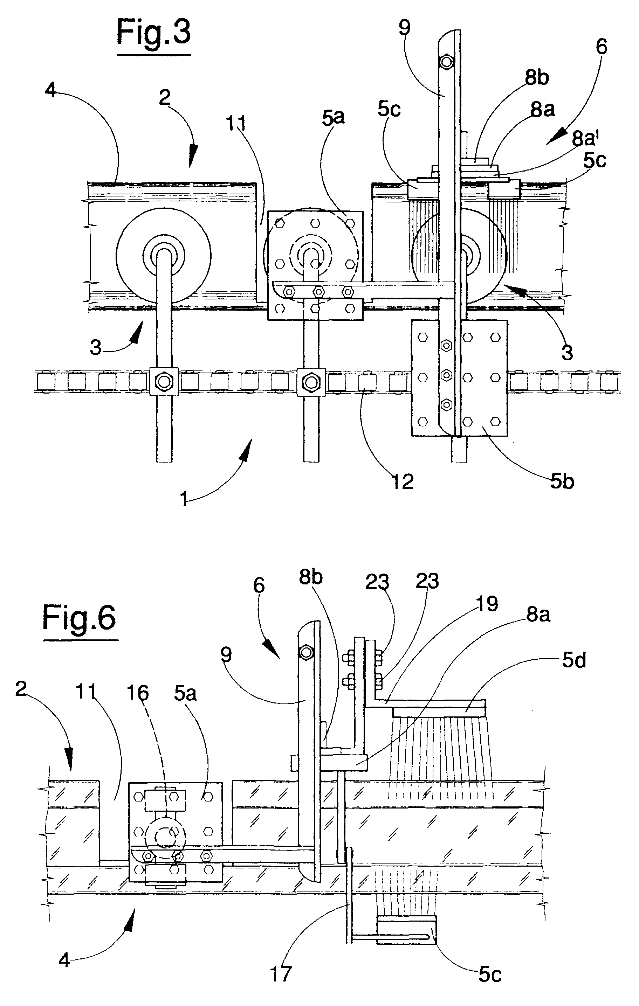

The apparatus comprises (Figures 1, 2 and 3) in a first embodiment, a set of brushes, generically identified with the number 5, borne by a support structure 6 associated to the rail 4, which comprises a frame 8 positioned above the rail 4, which frame can be removably attached to the guide-rail 4 by means of a horizontal planar flange 8a, bolted to the rail 4 itself by means of fastening means constituted for instance by a counter-flange 8a' or by screws conveniently attached to the rail 4.

More in particular, a first pair of brushes 5a of the set 5 are mutually opposite and positioned bilaterally to the rail 4 in correspondence with a recess 11 obtained in the rail 4 itself to expose to the action of the brushes 5 the support carriages 3 that transit along the rail 4. A second pair of brushes 5b are instead supported, below the rail 4 bilaterally to a motorised chain 12 that drives the support carriages 3. The first and the second brushes 5a,5b are supported by vertical arms 9, inferiorly branched, which form an integral part of the frame 8.

The latter in particular also comprises an "L" shaped horizontal cross element 8b, welded above the flange 8a, and a vertical upright 8c that projects from the flange 8a above the rail 4.

The cross element 8b is provided, at its opposite ends, with articulations 13 for the vertical arms 9 supporting the first and second brushes 5a,5b; whilst the vertical upright 8c supports in proximity with its own summit a horizontal screw 7a that extends towards the arms 9 connecting their top ends, superposed to the articulations 13; screw which in particular provides concrete embodiment to more general means 7 for adjusting the brushes 5a, 5b. From figures 1 and 2 one can immediately observe that the operation of the screw 7a allows to make the arms 9 rotate around the articulations 13 removing them or approaching them, inferiorly, to the vertical plane of longitudinal symmetry of the rail 4 thereby adjusting the position of the brushes 5 with respect to the conveyor 2.

The frame structure 8 described above can be applied universally to a plurality of different types of rail 4, regardless of the constructive shape related thereto, and allows to provide the apparatus 1 with its own individualising autonomy with respect to the rail 4 whereto it is destined. Moreover, the frame structure 8 allows directly to sustain the arms 15 for supporting further sets of brushes which, in the case at hand, can be constituted for instance by a third pair of brushes 5c also fastened directly to the cross element 8b and oriented in such a way as to project towards the carriage 3 for instance to clean areas other than those that can be reached by the first and by the second brushes 5a,5b, such as the surface of the rolling bodies 14 of the carriage 3 placed in direct contact with the rail 4.

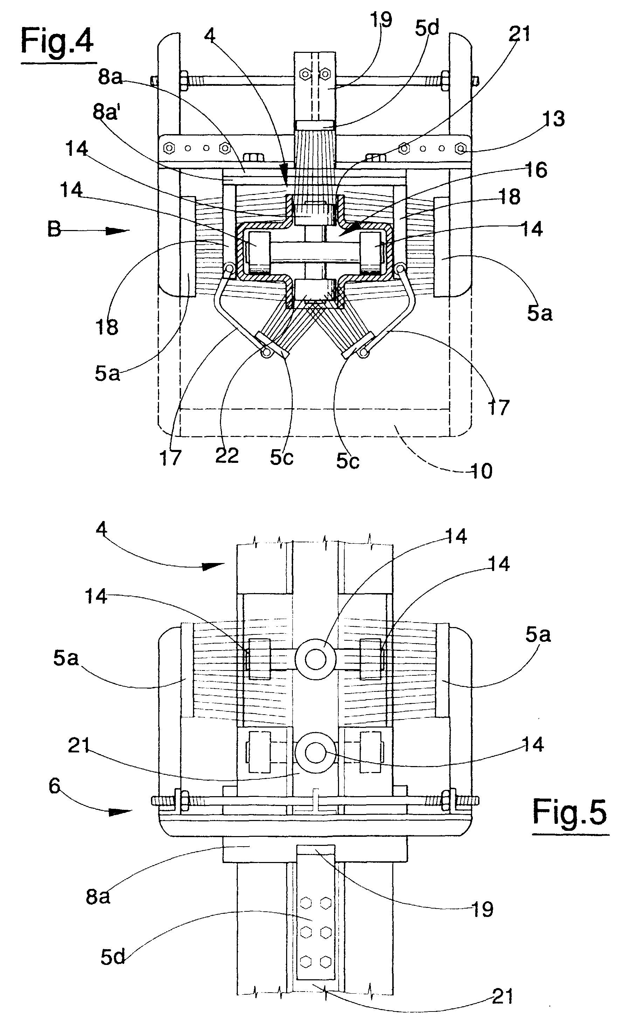

The frame structure 8 described above can be usefully employed also to realise cleaning apparatuses 1 destined to clean rails 4 embodied by section bars of tubular shape, wherein the carriages 3 are supported by rolling bodies 14 sustained by the arms of a cross 16, as shown in Figures 4, 5 and 6.

In the application to such types of rail 4, the first brushes 5a of the apparatus 1 operate as in the example described above. The same can be said for the second brushes 5b that may clean the organs for suspending the product which in Figures 4, 5 and 6 have been omitted solely for the sake of representational clarity.

As to the cleaning of the rolling bodies 14 supported by the vertical arms of the cross 16 accessible through lower and upper openings 22,21 of the rail 4, it is obtained by means of a third pair of brushes 5c located below the rail 4 and borne by related inclined arms 17, which are borne by vertical brackets 18 projecting inferiorly from the flange 8a; and by means of a fourth brush 5d also sustained by the flange 8a by means of a support 19 borne horizontally in overhang by the flange 8a itself (Figure 6) in a condition adjustable in height by means of screws 23 with respect to the flange 8a.

In brief, in this embodiment, the flange 8a supports a plurality of brushes 5a,5b,5c,5d distributed along the entire contour of the rail 4, although positioned in pairs on different planes in relation to the development in length of the rail 4 itself.

The invention described above may be subject to numerous modifications and variations, without thereby departing from the scope of the inventive concept.

Moreover, enhancements and integrations of further accessory elements are possible, with all such elements in any case being supported directly or indirectly by the same bolted flange 8a. A possible accessory element, shown by way of non limiting, indicative example in Figure 4 with a dashed line, can for instance be constituted by a container 10 for the collection of the products removed from the conveyor 2 as a result of the action of the brushes 5.

The invention thus conceived may be subject to numerous modifications and variations, without thereby departing from the scope of the inventive concept. Moreover, all components can be replaced with technically equivalent elements.

## Claims

1. Cleaning apparatus (1) for overhead conveyors (2) provided with carriages (3) for supporting products, movable on guide-rails (4), comprising at least a brush (5) for cleaning the conveyor (2); at least a support structure (6) of said one or each brush (5); adjustment means (7) for regulating the position of said one or each brush (5) with respect to the conveyor (2); characterised in that said support structure (6) comprises a frame (8) that can be removably fastened to the guide-rail (4) and universally applicable to a plurality of different types of rail (4), said one or each brush (5) being borne by at least an arm (9;15;17;19) supported solely by said frame (8).

2. Apparatus, according to claim 1, characterised in that said frame (8) comprises at least a flange (8a) which can be bolted to the rail (4) whereto said one or each arm (9;15;17;19) are directly connected.

3. Apparatus, according claim 1, characterised in that said flange (8a) supports a plurality of brushes (5) distributed on the contour of the rail (4).

4. Apparatus, according to claim 2, characterised in that said flange (8a) supports a container (10) for collecting products removed by said one or each brush (5).
